# EUROPEAN PATENT APPLICATION

(11) **EP 4 160 556 A1**
(43) Date of publication of application: **05.04.2023**
(21) Application number: 21812874.2
(22) Date of filing: 26.05.2021
(51) Int. Cl.: G07C 9/10, G07C 9/30

(54) **AUTOMATIC ACCESS CONTROL SYSTEM AND METHOD FOR HANDLING INSPECTION EXCEPTION DURING SECURITY CHECK**

(30) Priority: 27.05.2020 KR 20200063601
(71) Applicant: Incheoninternational Airport Corporation, Incheon 22382 (KR)
(72) Inventor: LEE, Kwon-Jin, Incheon 22370 (KR)
(74) Representative: Zimmermann, Tankred Klaus
(86) International application number: PCT/KR2021/095055
(87) International publication number: WO 2021/242080

(57) **Abstract**

Provided is an automatic access control system which can accurately detect the completion time of the security check of the preceding subject of inspection of the access control system, even if a situation occurs where an exception needs handling during the security check of a preceding subject of inspection. The automatic access control system comprises: a search controller which opens an entrance so that a subject of a search inspection enters a security check area; a primary sensor which generates a primary detection signal by primarily detecting the subject of the search inspection to identify whether or not there is an occurrence of a preset inspection handling exception during the security check; a secondary sensor which generates a secondary detection signal by performing secondary detection to determine whether or not a preset search completion condition is satisfied, and which has a different detection method from that of the primary sensor; and a control unit which performs the primary detection and the secondary detection again if there is an occurrence of handling an inspection exception.

## Description

### [Technical Field]

The present invention relates to an automatic access control technology, and more specifically, to an automatic access system and method that can accurately detect the completion time of the security check of a preceding subject of search inspection of an access control system even if an exception handling situation occurs during the security check of the preceding subject of search inspection.

### [Background Art]

Conventional access control systems only determine whether the people waiting for access in an area have access authority, so that unconditional access is allowed. Therefore, there is a problem of unauthorized entry into the security area because several people waiting for access can enter the security area at the same time even if the security check of the preceding visitor (a subject of search inspection) has not been completed.

That is, since the conventional access control system cannot automatically recognize the completion time of the security check of the preceding visitor (a subject of search inspection), there were frequent cases where a large number of people waiting for access enters the security area regardless of whether the preceding visitor had completed the security check.

Accordingly, there is a problem in that the accuracy of the security check is lowered, and cases of unauthorized entry into the security area without a security check occur. In order to solve this problem, a technique for determining the completion time of a process that is monitored and released by a pressure sensor using the pressure sensor has been proposed.

However, in this method, when an exception handling situation occurs during the security check of the subject of search inspection, there is a problem in that the automatic access control system recognizes that the search inspection is completed even though the security check process of the preceding subject of inspection continues.

In other words, during the security check (hand scanner), when the visitors must put their belongings back under the X-ray or need to get out of a footrest and undergo another search inspection, the automatic access control system extracted the completion time of the search with only one step sensor. Therefore, even though the security check was not completed, an error recognizing that the search inspection was completed has occurred.

In addition, when the exception handling for the preceding subject of inspection is performed, the person waiting for access can proceed to the security area at any time, so there is a problem that vulnerabilities such as unauthorized entries of previously presented multiple visitors occur again.

### [Disclosure]

### [Technical Problem]

In order to solve the above conventional problems, an object of the present invention is to provide an automatic access system and method that can accurately detect the completion time of the security check of a preceding subject of search inspection even if an exception handling situation occurs during the security check of the preceding subject of search inspection.

### [Technical Solution]

In order to achieve the above object, the present invention provides an automatic access control system that can accurately detect the completion time of the security check of a preceding subject of search inspection even if an exception handing situation occurs during the security check of the preceding subject of search inspection.

The automatic access control system includes
a search controller which opens a door so that a subject of search inspection enters a security check area;
a primary sensor which generates a primary detection signal by primarily detecting the subject of search inspection to identify whether or not there is an occurrence of a preset search inspection exception handling during security check;
a secondary sensor which generates a secondary detection signal by performing secondary detection to determine whether or not a preset search completion condition is satisfied, and which has a different detection method from that of the primary sensor; and
a control unit which performs the primary detection and the secondary detection again if there is the occurrence of the search inspection exception handling.

In addition, the search completion condition is that after a plurality of the primary detection signals is generated by the primary sensor, the secondary detection signal is sequentially generated singly by the secondary sensor.

In addition, the plurality of the primary detection signals includes a primary sub-detection signal generated when the subject of search inspection contacts the primary sensor and a secondary sub-detection generated when the subject of search inspection leaves the primary sensor after contacting the primary sensor.

Here, the search inspection exception handling is performed when a sudden security check occurs during the primary sub-detection signal and the secondary sub-detection signal are generated.

In addition, the search inspection exception handing is that if the secondary detection does not occur for a preset time after the primary detection, processes for the primary detection and the secondary detection are performed again.

In addition, if the search inspection exception handling occurs, the process for the secondary detection immediately after the primary detection is in a proceeding impossible state.

In addition, the primary sensor is any one of a pressure sensor, a contact sensor, and a touch sensor.

In addition, the secondary sensor is any one of an infrared ray sensor (IR) sensor, a laser sensor, and a smart sensor.

In addition, a detector is disposed between the search controller and the primary sensor.

In addition, the automatic access control system includes a central server which compares pass information with a previously stored authentication information database to determine whether the subject of search inspection is an authorized subject of search inspection, and transmits a determination result to the control unit.

In addition, the automatic access control system further includes a search indicator which displays that an entrance is possible.

On the other hand, another embodiment of the present invention provides an automatic access control system for handling search inspection exception during security search, including a search controller which opens a door so that a subject of search inspection enters a security check area; a primary sensor which generates a primary detection signal by primarily detecting the subject of search inspection to identify whether or not there is an occurrence of a preset search inspection exception handling during security check; a secondary sensor which generates a secondary detection signal by performing secondary detection to determine whether or not a preset search completion condition is satisfied, and which has the same detection method as that of the primary sensor; and a control unit which performs the primary detection and the secondary detection again if there is the occurrence of the search inspection exception handling.

In addition, the search completion condition is that after a plurality of the primary detection signals is generated by the primary sensor, a plurality of the secondary detection signals is sequentially generated by the secondary sensor.

In addition, the plurality of the primary detection signals includes a primary-1 sub-detection signal generated when the subject of search inspection contacts the primary sensor, and a primary-2 sub-detection signal generated when the subject of search inspection leaves the primary sensor, and the plurality of the secondary detection signals includes a secondary-1 sub-detection signal generated when the subject of search inspection contacts the secondary sensor and a secondary-2 sub-detection signal generated when the subject of search inspection leaves the secondary sensor after contacting the secondary sensor.

In addition, the primary and secondary sensors are any one of a pressure sensor, a contact sensor, and a touch sensor.

On the other hand, another embodiment of the present invention provides an automatic access control method for handling search inspection exception during security check including the steps of (a) opening a door by a search controller so that a subject of search inspection enters a security check area; (b) generating a primary detection signal by primarily detecting the subject of search inspection by a primary sensor to identify whether or not there is an occurrence of a preset search inspection exception handling during security check; (c) generating a secondary detection signal by performing secondary detection by a secondary sensor which has a different detection method from that of the primary sensor to determine whether or not a preset search completion condition is satisfied; and (d) performing the primary detection and the secondary detection again by a control unit if there is the occurrence of the search inspection exception handling.

On the other hand, another embodiment of the present invention provides an automatic access control method for handling search inspection exception during security check including the steps of (a) opening a door by a search controller so that a subject of search inspection enters a security check area; (b) generating a primary detection signal by primarily detecting the subject of search inspection by a primary sensor to identify whether or not there is an occurrence of a preset search inspection exception handling during security check; (c) generating a secondary detection signal by performing secondary detection by a secondary sensor which has the same detection method as that of the primary sensor to determine whether or not a preset search completion condition is satisfied; and (d) performing the primary detection and the secondary detection again by a control unit if there is the occurrence of the search inspection exception handling.

### [Advantageous Effects]

According to the present invention, it is possible to implement an exception handling function by additionally installing a means for detecting search completion time such as an infrared sensor, a laser sensor, and a secondary foot sensor, and additionally applying a detection condition for the completion time.

In addition, another effect of the present invention is to perform a precise security check by a security personnel by making the process clearer so as not to recognize the completion of the search by the system even during exception handling so that the entry of the waiting person is not allowed.

In addition, another effect of the present invention is to provide a flexible process application by using a detection processor (detection with one pressure sensor) of a conventional system, and optionally using an infrared sensor, a human body sensor, a laser detection sensor of human body, a pressure sensor, etc. as a secondary detection means.

In addition, another effect of the present invention is to detect the correct time point by ignoring the detection of the security personnel by the system even if the security personnel is detected while the subject of search inspection is being performed because the system must satisfy all process generation sequences and process set condition for determining the completion of the search.

### [Description of Drawings]

FIG. 1 illustrates a block diagram of an automatic access control system for handling a search inspection exception during a security check according to an embodiment of the present invention.
FIG. 2 illustrates a configuration block diagram of an automatic access control system for handling a search inspection exception during a security check according to another embodiment of the present invention.
FIG. 3 illustrates a detailed configuration block diagram of a control unit illustrated in FIG. 1 or FIG. 2.
FIG. 4 illustrates a flowchart of a process of performing a search inspection exception handling during a security check according to FIG. 1.
FIG. 5 illustrates a flowchart of a process of performing a search inspection exception handling during a security check according to FIG. 2.

### [Mode for Invention]

The advantages and features of the present invention and ways to achieve them will be apparent by making reference to embodiments as described below in detail in conjunction with the accompanying drawings. However, the present invention is not limited to the embodiments set forth below, but may be implemented in various different forms. The following embodiments are provided only to completely disclose the present invention and inform those skilled in the art of the scope of the disclosure, and the present invention is defined only by the scope of the appended claims. Throughout the specification, the same or like reference numerals designate the same or like components.

Like numbers refer to like components throughout the specification. As used herein, the term "and/or" includes any and all combinations of one or more of the associated listed items.

The terms used herein are merely used to describe specific embodiments, and are not intended to limit the present invention. As used herein, the singular forms are intended to include the plural forms as well, unless the context clearly indicates otherwise. The terms such as "include" and/or "have" may be construed to denote a certain component, step, operation, and/or element, but may not be construed to exclude the existence of or a possibility of addition of one or more other components, steps, operations, and/or elements.

Although it is used to describe various components such as first and second, it is apparent that these components are not limited to these terms. These terms are only used to distinguish one component from another component. Therefore, it is obvious that the first component mentioned below may be the second component within the spirit of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, will not be interpreted in an idealized or overly formal sense unless expressly so defined herein.

Hereinafter, with reference to the accompanying drawings, an automatic access control system and method for processing an inspection exception during a security check according to an embodiment of the present invention will be described in detail.

An exception handling during security check refers to a procedure for exceptionally handing the case where exceptions such as a situation where a subject of security inspection must go through a door-type gate again during security check (which is performed by a hand scanner, etc.) or a situation where X-ray inspection of prohibited items (such as bags) is required again. In general, the automatic access control system extracts the completion time of the search with only one foot sensor, and an error of recognizing the completion of the security check even though the security check is not completed occurs. Accordingly, this problem can be solved by additionally installing sensors and additionally developing and applying a condition for detecting the completion point.

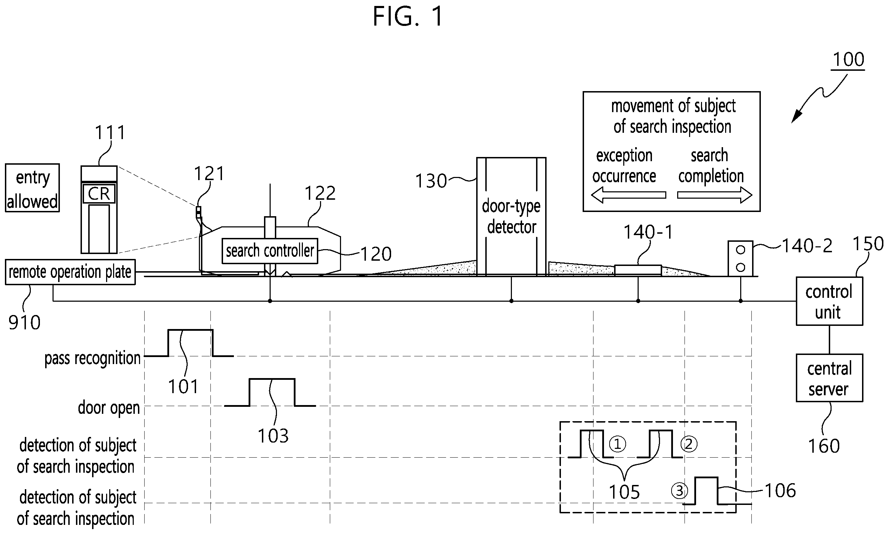

FIG. 1 illustrates a block diagram of an automatic access control system 100 for handling a search inspection exception during a security check according to an embodiment of the present invention. Referring to FIG. 1, the automatic access control system 100 may be configured to include a remote operation panel 110, a search controller 120, a detector 130, a primary sensor 141, a secondary sensor 142, a control unit 150, a central server 160, and the like.

The remote operation panel 110 performs a function of displaying an entry permission or entry waiting of a subject of search inspection. To this end, the remote control panel 110 may be configured to include a guide display 111. The guide display 111 may be a liquid crystal display (LCD), light emitting diodes (LED), or organic LED (OLED). It is also apparent that the remote control panel 110 may be configured with hardware and software such as a microprocessor, a communication circuit, and a memory.

The memory may include at least one type of storage medium among a flash memory type, a hard disk type, a multimedia card micro type, a card type memory (e.g., secure digital (SD) or eXtreme digital (XD) memory, or the like), a random access memory (RAM), a static random access memory (SRAM), a read only memory (ROM), an electrically erasable programmable read only memory (EEPROM), a programmable read only memory (PROM), a magnetic memory, a magnetic disk, and an optical disk. In addition, the memory may operate in associated with web storage and a cloud server for performing a storage function on the Internet.

The search controller 120 performs a control function of recognizing an admission of a subject of search inspection, and opening a door to allow the subject of search inspection to enter a security check area for the security check when a legitimate authority is confirmed. In other words, the search controller 120 recognizes the pass for the subject of search inspection who is allowed to enter, and opens the door to the recognized subject of search inspection. In addition, a search indicator 121 for displaying information guiding a search procedure to the subject of search inspection may be further configured. The search controller 120 may include hardware and software such as a microprocessor, a communication circuit, and a memory. In addition, a reader (not illustrated) that reads barcodes, quick response (QR) codes, radio frequency identification (RFID), near field communication (NFC), etc. present in pass information may be configured.

The search controller 120 transmits the read pass information to the central server 160 to perform an authentication process. When the pass information is confirmed by authentication, the search controller 120 outputs information guiding the search procedure through the search indicator 121. In addition, a communicator 122 for transmitting and receiving information may be configured. Although FIG. 1 illustrates the remote control panel 110 and the search controller 120 separately, the remote control panel 110 and the search controller 120 may be configured to be integrated.

The detector 130 is a security device for pre-determining the presence or absence of possession of metals, which is related to security issues, when the subject of search inspection passes through the door-type detector. Accordingly, the detector 130 may be configured to include a detector body (not illustrated) composed of a pair of vertical panels (not illustrated) facing each other spaced apart by a predetermined distance and a horizontal panel (not illustrated) connecting the upper ends of the vertical panels, a transmitter (not illustrated) and receiver (not illustrated) installed inside the pair of vertical panels and transmitting and receiving frequencies for detecting metals between these panels, and the like. Also, it is apparent that a display unit (not illustrated) may be installed on the body side of the detector to determine whether metal is detected or not according to the transmission/reception state of the transmitter and receiver. Since the detector 130 is widely known, further description thereof will be omitted. The display unit may be an LCD, an LED, an OLED, a beep generator, or the like.

The primary sensor 141 is a means for detecting search completion, and may be a pressure sensor (that is, a search plate sensor) which generates a detection signal in response to the pressure when the subject of search inspection steps on a floor. Also, the primary sensor 41 may be a contact sensor, a touch sensor, an infrared (IR) sensor, a laser sensor, an ultrasonic sensor, a smart sensor, or the like, in addition to the pressure sensor.

The secondary sensor 142 is a means for detecting search completion, and may be a pressure sensor, a contact sensor, a touch sensor, an infrared (IR) sensor, a laser sensor, an ultrasonic sensor, or a smart sensor. After being detected by the primary sensor 141, the secondary sensor 142 performs a function of detecting search completion when the subject of search inspection leaves the primary sensor 141.

The control unit 150 performs control while exchanging data, control signals, etc. with the remote operation panel 110, the search controller 120, the detector 130, the primary sensor 141, the secondary sensor 142, and the like which are components. In addition, the control unit 150 transmits the read pass information to the central server 160 for authentication processing. In addition, although the communication connection between the components is illustrated as wired, it is not limited thereto, and wireless and wired/wireless integration are also possible.

The communication connection refers to a connection structure capable of exchanging information between the respective nodes, and may be public switched telephone network (PSTN), public switched data network (PSDN), integrated services digital networks (ISDN), broadband ISDN (BISDN), local area network (LAN), metropolitan area network (MAN), wide LAN (WLAN), or the like. However, the present invention is not limited thereto, and may be code division multiple access (CDMA), wideband code division multiple access (WCDMA), wireless broadband (Wibro), wireless fidelity (WiFi), high speed downlink packet access (HSDPA) network, Bluetooth, near field communication (NFC) network, satellite broadcasting network, analog broadcasting network, digital multimedia broadcasting (DMB) network, or the like, which is a wireless communication network. Alternatively, it may be a combination of these wired communication network and wireless communication network.

The central server 160 compares the pass information with a pre-stored authentication information database (not illustrated) and transmits pass approval information to the control unit 150 when it is recognized as the subject of search inspection with legitimate authority. Also, if it is not recognized as the subject of search inspection with legitimate authority, it is apparent that the central server 160 transmits pass/disapproval information to the control unit 150. Accordingly, the control unit 150 does not open or opens the door through the search controller 120 depending on whether the pass is approved. That is, in the case of pass approval, the door may be opened, which may be displayed on the search indicator 121 as well. In case of pass disapproval, the closed state of the door may be maintained, which may be displayed on the search indicator 121 as well.

In order to execute such an algorithm, the control unit 150 may include hardware and software such as a process, an electronic circuit, and a memory. In addition, the central server 160 may be configured with hardware and software such as a process, an electronic circuit, and a memory.

With continued reference to FIG. 1, the search completion conditions (the order of occurrence and the procedure must be the same) of a preceding subject of search inspection are as follows.
A. Search completion conditions:
   After pass recognition (101) and door opening (103), "① → (AND) → ② → (AND) → ③"
   In other words, ① the subject of search inspection is detected by the primary sensor 141, ② after completion of the search inspection, the search completion is determined when the subject of search inspection comes down from the primary sensor 141 and ③ the subject of search inspection is detected by the secondary sensor 142. That is, the search completion is determined when all the primary detection signals are generated when the subject of search inspection steps on the primary sensor 141 and when the subject of search inspection leaves from the primary sensor 141 (105) and the secondary detection signal is generated when the subject of search inspection is detected by the secondary sensor 142 (106). The primary detection signal includes a primary sub-detection signal generated when the subject of search inspection steps on the primary sensor 141 and a secondary sub-detection signal generated when the subject of search inspection leaves the primary sensor 141.
B. A detection handling of a security personnel by the secondary sensor 142 during security check
   After the primary detection signal is generated as the subject of search inspection steps on the primary sensor 141, the movement of the subject of search inspection may be an exception occurrence or a search completion. In case of exception occurrence, when the security check is in progress by the security personnel, the result detected by the sensors is "① → (AND) → ③". Therefore, even if the security personnel is detected by the secondary sensor 142 during the security check by the security personnel, the security check of a preceding subject of search inspection is still in progress and the door is not opened. Also, when recognizing a pass, the signal is ignored. ③ can be caused by the security personnel.
C. Handling of search inspection exception:
   Even if exception handling occurs during "① → (AND) → ②", the condition (3) is not satisfied, so the control unit 150 recognizes that the security check is in progress. Also, it is apparent that when exception handling occurs, it is impossible to enter the process in step (3). Therefore, after completing the handling of the occurred exception situation, the security check is completed only when proceeding again with "① → (AND) → ② → (AND) → ③". Even if the search personnel handles the exception, the control unit 150 may automatically recognize the exact completion time of the security check of the subject of search inspection.

In other words, after performing "① → (AND) → ②" for exception handling, if "③" is not detected for the set time, the control unit 150 transmit the search inspection completion signal to the central server 160 only if the process proceeds from the "①" process again and the "search completion condition" is completed.

Also, when the process of ① → (AND) → ③ "detects the search personnel", the detection signal by the processor (3) is ignored and waiting is performed until the detection signal by the process ② occurs.

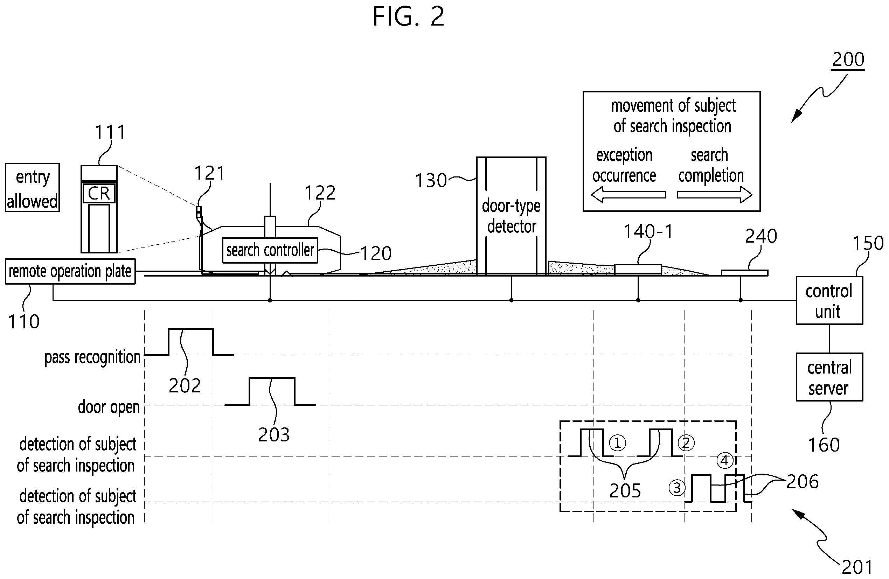

FIG. 2 illustrates a configuration block diagram of an automatic access control system 200 for handling a search inspection exception during a security check according to another embodiment of the present invention. In particular, FIG. 2 illustrates a configuration block diagram of an automatic access control system 200 that performs an exception handling during security check when both the primary sensor 140-1 and the secondary sensor 140-2 are the same sensor. In addition, the same reference numerals as in FIG. 1 refer to the same components.

Referring to FIG. 2, the search completion conditions (the order of occurrence and the procedure must be the same) of a preceding subject of search inspection are as follows.
A. Search completion conditions:
   After pass recognition (202) and door opening (203), "① → (AND) → ② → (AND) → ③ → (AND) → ④"

In other words, ① the subject of search inspection is detected by the primary sensor 140-1, ② after completing the search inspection, the search completion is determined only when the subject of search inspection comes down from the primary sensor 140-1 ③, goes through ④ the secondary sensor 140-2. That is, the search completion is determined when all the first detection signals are generated (205) when the subject of search inspection steps on the primary sensor 140-1 and the subject of search inspection leaves from the primary sensor 140-1, and the secondary detection signal is generated (206) when the subject of search inspection passes through the secondary sensor 140-2. The primary detection signal includes a primary-1 sub-detection signal generated when the subject of search inspection steps on the primary sensor 140-1, and a primary-2 sub-detection signal generated when the subject of search inspection leaves from the primary sensor 140-1.

In addition, the secondary detection signal includes a secondary-1 sub-detection signal generated when the subject of search inspection steps on the secondary sensor 140-2, and a secondary-2 detection signal generated when the subject of search inspection leaves from the secondary sensor 140-2.

### B. A detection handling of a search personnel by the secondary sensor 140-2 during security check

After the primary detection signal is generated as the subject of search inspection steps on the primary sensor 140-1, the movement of the subject of search inspection may be an exception occurrence or a search completion. In the case of exception occurrence, when the security check by the security personnel is in progress, the result detected by the sensors is "① → (AND) → ③ → (AND) → ④". Therefore, even if the security personnel is detected by the secondary sensor 140-2 during the security check by the security personnel, the security check of the preceding subject of search inspection is still in progress and the door is not opened. Also, when recognizing a pass, the signal is ignored. ③ and ④ can be caused by the security personnel.

### C. Handing of search inspection exception:

Even if exception handing occurs during "① → (AND) → ②", the condition of ③ → (AND) → ④ is not satisfied, so the control unit 150 recognizes that the security check is in progress. Of course, when exception handling occurs, it is impossible to enter the process in step ③. Therefore, after completing the handling of the occurred exception, the security check is completed only when the process goes again as "① → (AND) → ③ → (AND) → ④". Even if the search personnel handles the exception, the control unit 150 may automatically recognize the completion time of the security check of the subject of search inspection.

In other words, after performing "① → (AND) → ②" for exception handling, if the process of "③→(AND)→ ④" is not detected for the set time, the control unit 150 transmits a search inspection completion signal to the central server 160 only when the process is proceed from the "①" again and "search completion condition" is satisfied.

In addition, even if the search personnel is detected by "③,④" during the process of ① → (AND) → ③→(AND) → ④, the detection signal generated by the processes of "③,④" are ignored until the detection signal is generated by the process of ②.

In FIGS. 1 and 2, an embodiment of the present invention has been described using one or two search plate sensors (that is, pressure sensors), but the present invention is not limited thereto, and can use other sensors without using the two search plate sensors. For example, if two distance sensors are arranged at regular intervals and the subject of search inspection is detected within about 3m, the primary detection signal is generated, and when the subject of search inspection is detected again within about 2m, the secondary detection signal is generated.

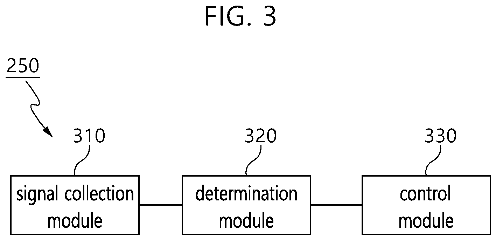

FIG. 3 illustrates a detailed configuration block diagram of the control unit 150 illustrated in FIG. 1 or FIG. 2. Referring to FIG. 3, the control unit 150 may be configured to include a signal collection module 310 that collects detection signals, a determination module 320 that determines whether an exception situation has occurred using the collected detection signals and determines whether it corresponds to the search inspection exception handling, a control module 330 that controls the components in order to process the search inspection exception handling if it corresponds to the search inspection exception handling.

The term "... module" described in drawings means a unit for processing at least one function or operation, which can be implemented in software and/or hardware. In hardware implementation, it can be implemented as an application specific integrated circuit (ASIC), a digital signal processing (DSP), a programmable logic device (PLD), a field programmable gate array (FPGA), a processor, a microprocessor, and other electronic units, which are designed to perform the functions described above, or a combination thereof. In software implementation, it can include a software component (element), an object-oriented software component, a class component and a task component, a process, a function, an attribute, a procedure, a subroutine, a segment of a program code, a driver, a firmware, a microcode, data, databases, a data structure, a table, an array, and a variable. The software, the data, and the like can be stored in a memory, and are executed by a processor. The memory or the processor can employ various means well known to those skilled in the art.

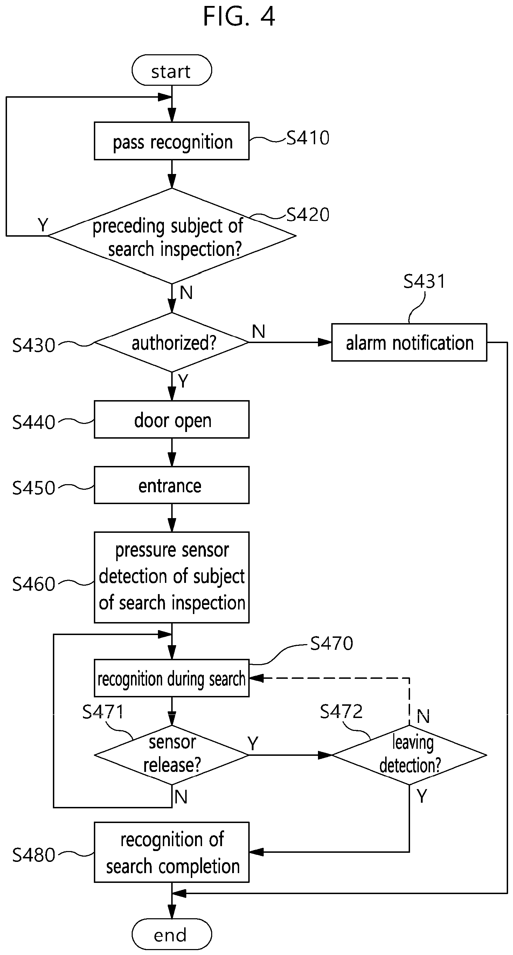

FIG. 4 illustrates a flowchart of a process of performing a search inspection exception handling during a security check according to FIG. 1. Referring to FIG. 4, when the search controller 120 receives pass information from the subject of search inspection through a pass recognition means (such as a reader), the control unit 150 identifies whether it is an authorized preceding subject of search inspection (S410, S420). Also, it may determine whether or not it is the authorized preceding subject of search inspection through the pass information, access records, etc. stored in the central server 160.

In step S430, if it is determined as the authorized preceding subject of search inspection, the control unit 150 opens the door through the search controller 120 and allows the preceding subject of search inspection to enter (steps S440, S450). On the other hand, if it is an unauthorized preceding subject of search inspection in step S430, an alarm is notified (step S431). Of course, it is apparent that such an alarm may be transmitted as a message to the security personnel or displayed on the automatic access control system.

Thereafter, if the preceding subject of search inspection passes through the detector 130 and is detected by the primary sensor 141, and the searching is recognized, it is determined whether there is a sensor release (steps S460, S470, and S471). That is, a primary search inspection is proceeded.

If there is a sensor release (that is, temporarily stopping the sensor operation) in step S471, the control unit 150 determines whether the preceding subject of search inspection has left the search area using the secondary sensor 142 (step S472).

If the staying of the preceding subject of search inspection is detected in the step (S472), the steps S470 to S471 are proceeded.

Otherwise, if the leaving of the preceding subject of search inspection is determined in the step S472, a search inspection completion signal is generated (step S480).

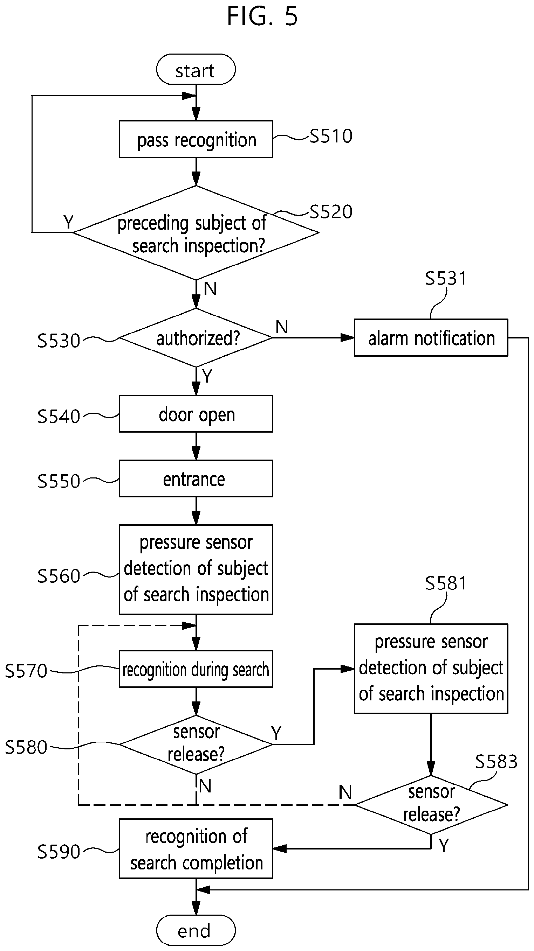

FIG. 5 illustrates a flowchart of a process of performing a search inspection exception handling during a security search according to FIG. 2. Referring to FIG. 5, when the search controller 120 receives pass information from the subject of search inspection through a pass recognition means (such as a reader), the control unit 150 identifies whether it is the authorized preceding subject of search inspection (S510, S520). Of course, it is apparent that whether or not it is the authorized preceding subject of search inspection can be determined through the pass information, access records, etc. stored in the central server 160.

In step S530, if it is determined as the authorized preceding subject of search inspection, the control unit 150 opens the door through the search controller 120 and allows the preceding subject of search inspection to enter (steps S540 and S550). Otherwise, if it is determined as the unauthorized preceding subject of search inspection in step S530, an alarm is notified (step S531). Of course, such an alarm may be transmitted as a message to a security personnel or displayed on the automatic access control system.

Thereafter, if the preceding subject of search inspection passes through the detector 130 and is detected by the primary sensor 140-1 and it is recognized during the search, it is determined whether there is a sensor release (steps S560, S470, and S580). That is, the primary search inspection is proceeded.

If there is a sensor release (that is, temporarily stopping the sensor operation) in step S580, the control unit 150 detects the preceding subject of search inspection using the secondary sensor 140-2, and determines whether there is the sensor release (step S581, S583).

If there is the sensor release in step S583, a search inspection completion signal is generated (step S490). Otherwise, if there is no sensor release in step S583, steps S570 to S580 proceed again.

In addition, the steps of the method or the algorithm which has been described regarding the embodiments proposed herein are realized in the form of program instructions executable through various computer means such as a microprocessor, a processor, a central processing unit (CPU) and are recordable in a computer-readable medium. The computer-readable recording medium may include program (instruction) codes, data files, and data structures, alone or in combination.

The program (instruction) codes recorded on the medium may be designed and configured specifically for the present invention or may be a type that is known and readily available to those having ordinary skill in the art. Examples of the computer-readable recording medium may include magnetic media such as a hard disk, a floppy disk, and a magnetic tape, an optical media such as a CD-ROM, a DVD, and Blue-ray, and a semiconductor storage element specially configured to store and execute a program (instruction) code such as a ROM, a RAM, and a flash memory.

Here, examples of a program (instruction) code may include high-level language code executable by a computer using an interpreter in addition to machine code created by a compiler. The hardware device may be configured to operate as at least one software module to perform an operation of the present invention and vice versa.

## Claims

1. An automatic access control system for handling search inspection exception during security check comprising:
a search controller 120 which opens a door so that a subject of search inspection enters a security check area;
a primary sensor 141 which generates a primary detection signal by primarily detecting the subject of search inspection to identify whether or not there is an occurrence of a preset search inspection exception handling during security check;
a secondary sensor 142 which generates a secondary detection signal by performing secondary detection to determine whether or not a preset search completion condition is satisfied, and which has a different detection method from that of the primary sensor 141; and
a control unit 150 which performs the primary detection and the secondary detection again if there is the occurrence of the search inspection exception handling.

2. The automatic access control system of claim 1, wherein the search completion condition is that after a plurality of the primary detection signals is generated by the primary sensor 141, the secondary detection signal is sequentially generated singly by the secondary sensor 142.

3. The automatic access control system of claim 2, wherein the plurality of the primary detection signals includes a primary sub-detection signal generated when the subject of search inspection contacts the primary sensor 141 and a secondary sub-detection generated when the subject of search inspection leaves the primary sensor 141 after contacting the primary sensor.

4. The automatic access control system of claim 3, wherein the search inspection exception handling is performed when a sudden security check occurs during the primary sub-detection signal and the secondary sub-detection signal are generated.

5. The automatic access control system of claim 1, wherein the search inspection exception handing is that if the secondary detection does not occur for a preset time after the primary detection, processes for the primary detection and the secondary detection are performed again.

6. The automatic access control system of claim 5, wherein if the search inspection exception handling occurs, the process for the secondary detection immediately after the primary detection is in a proceeding impossible state.

7. The automatic access control system of claim 1, wherein the primary sensor 141 is any one of a pressure sensor, a contact sensor, and a touch sensor.

8. The automatic access control system of claim 1, wherein the secondary sensor 142 is any one of an infrared ray sensor (IR) sensor, a laser sensor, and a smart sensor.

9. The automatic access control system of claim 1, wherein a detector 130 is disposed between the search controller 120 and the primary sensor.

10. The automatic access control system of claim 1, comprising a central server 160 which compares pass information with a previously stored authentication information database to determine whether the subject of search inspection is an authorized subject of search inspection, and transmits a determination result to the control unit 150.

11. The automatic access control system of claim 1, further comprising a search indicator 121 which displays that an entrance is possible.

12. An automatic access control system for handling search inspection exception during security search comprising:
a search controller 120 which opens a door so that a subject of search inspection enters a security check area;
a primary sensor 140-1 which generates a primary detection signal by primarily detecting the subject of search inspection to identify whether or not there is an occurrence of a preset search inspection exception handling during security check;
a secondary sensor 140-2 which generates a secondary detection signal by performing secondary detection to determine whether or not a preset search completion condition is satisfied, and which has the same detection method as that of the primary sensor 141-1; and
a control unit 150 which performs the primary detection and the secondary detection again if there is the occurrence of the search inspection exception handling.

13. The automatic access control system of claim 12, wherein the search completion condition is that after a plurality of the primary detection signals is generated by the primary sensor 140-1, a plurality of the secondary detection signals is sequentially generated by the secondary sensor 140-2.

14. The automatic access control system of claim 13, wherein the plurality of the primary detection signals includes a primary-1 sub-detection signal generated when the subject of search inspection contacts the primary sensor 140-1, and a primary-2 sub-detection signal generated when the subject of search inspection leaves the primary sensor 140-1, and the plurality of the secondary detection signals includes a secondary-1 sub-detection signal generated when the subject of search inspection contacts the secondary sensor 140-2 and a secondary-2 sub-detection signal generated when the subject of search inspection leaves the secondary sensor 140-2 after contacting the secondary sensor 140-2.

15. The automatic access control system of claim 12, wherein the primary and secondary sensors 140-1, 140-2 are any one of a pressure sensor, a contact sensor, and a touch sensor.

16. An automatic access control method for handling search inspection exception during security check comprising the steps of:
(a) opening a door by a search controller 120 so that a subject of search inspection enters a security check area;
(b) generating a primary detection signal by primarily detecting the subject of search inspection by a primary sensor 141 to identify whether or not there is an occurrence of a preset search inspection exception handling during security check;
(c) generating a secondary detection signal by performing secondary detection by a secondary sensor 142 which has a different detection method from that of the primary sensor 141 to determine whether or not a preset search completion condition is satisfied; and
(d) performing the primary detection and the secondary detection again by a control unit 150 if there is the occurrence of the search inspection exception handling.

17. An automatic access control method for handling search inspection exception during security check comprising the steps of:
(a) opening a door by a search controller 120 so that a subject of search inspection enters a security check area;
(b) generating a primary detection signal by primarily detecting the subject of search inspection by a primary sensor 140-1 to identify whether or not there is an occurrence of a preset search inspection exception handling during security check;
(c) generating a secondary detection signal by performing secondary detection by a secondary sensor 140-2 which has the same detection method as that of the primary sensor 141-1 to determine whether or not a preset search completion condition is satisfied; and
(d) performing the primary detection and the secondary detection again by a control unit 150 if there is the occurrence of the search inspection exception handling.
